(19) Europäisches Patentamt
European Patent Office
Office européen des brevets

(11) **EP 3 840 502 B1**

(12) **EUROPEAN PATENT SPECIFICATION**

(45) Date of publication and mention
of the grant of the patent:
**19.02.2025 Bulletin 2025/08**

(21) Application number: **19856332.2**

(22) Date of filing: **30.08.2019**

(51) International Patent Classification (IPC):
$H04W\ 72/51^{(2023.01)}$    $H04W\ 74/00^{(2009.01)}$
$H04W\ 72/0453^{(2023.01)}$    $H04W\ 84/12^{(2009.01)}$
$H04W\ 8/24^{(2009.01)}$    $H04W\ 88/08^{(2009.01)}$
$H04W\ 72/0446^{(2023.01)}$

(52) Cooperative Patent Classification (CPC):
**H04W 72/51; H04W 74/006;** H04W 8/24;
H04W 72/0446; H04W 72/0453; H04W 84/12;
H04W 88/08

(86) International application number:
**PCT/CN2019/103767**

(87) International publication number:
**WO 2020/043196 (05.03.2020 Gazette 2020/10)**

(54) **INFORMATION TRANSMISSION METHODS, APPARATUSES, PROGRAM AND COMPUTER-READABLE RECORDING MEDIUM**

VERFAHREN ZUR ÜBERTRAGUNG VON INFORMATIONEN, VORRICHTUNGEN, PROGRAMM UND COMPUTERLESBARES AUFZEICHNUNGSMEDIUM

PROCÉDÉS DE TRANSMISSION D'INFORMATIONS, APPAREILS, PROGRAMME ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2018 CN 201811015796**

(43) Date of publication of application:
**23.06.2021 Bulletin 2021/25**

(73) Proprietor: **Huawei Technologies Co., Ltd.**
**Longgang District**
**Shenzhen, Guangdong 518129 (CN)**

(72) Inventors:
• **HAN, Xiao**
**Shenzhen, Guangdong 518129 (CN)**
• **GAN, Ming**
**Shenzhen, Guangdong 518129 (CN)**
• **GUO, Yuchen**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(56) References cited:
**CN-A- 102 457 919**    **CN-A- 103 561 449**
**CN-A- 107 889 257**    **US-A1- 2013 077 654**

• **FRANK HSU (MEDIATEK INC): "CR for section 9.4.2 BSS load Doc", vol. 802.11ax, 11 September 2017 (2017-09-11), pages 1 - 6, XP068115315, Retrieved from the Internet <URL:https://mentor.ieee.org/802.11/dcn/17/11-17-0307-00-00ax-cr-for-section-9-4-2-bss-load-doc.docx> [retrieved on 20170911]**

- FRANK HSU (MEDIATEK INC): "CR for section 9.4.2 BSS load PPT", vol. 802.11ax, 15 March 2017 (2017-03-15), pages 1 - 18, XP068115316, Retrieved from the Internet <URL:https://mentor.ieee.org/802.11/dcn/17/11-17-0308-00-00ax-cr-for-section-9-4-2-bss-load-ppt.pptx> [retrieved on 20170315]
- GEORGE CHERIAN (QUALCOMM): "11ax 6GHz Operation", vol. 802.11ax, 10 July 2018 (2018-07-10), pages 1 - 8, XP068128413, Retrieved from the Internet <URL:https://mentor.ieee.org/802.11/dcn/18/11-18-1256-00-00ax-11ax-6ghz-operation.pptx> [retrieved on 20180710]
- ALFRED ASTERJADHI (QUALCOMM INC): "MAC CR subclause 27.16.1", vol. 802.11ax, 10 July 2018 (2018-07-10), pages 1 - 13, XP068128331, Retrieved from the Internet <URL:https://mentor.ieee.org/802.11/dcn/18/11-18-1211-00-00ax-mac-cr-subclause-27-16-1.docx> [retrieved on 20180710]
- MING GAN (HUAWEI): "CR-on-BSS-Load-Information-in-802.11ax-follow-up", vol. 802.11ax, 11 September 2017 (2017-09-11), pages 1 - 20, XP068117002, Retrieved from the Internet <URL:https://mentor.ieee.org/802.11/dcn/17/11-17-1397-00-00ax-cr-on-bss-load-information-in-802-11ax-follow-up.pptx> [retrieved on 20170911]
- LAURENT CARIOU (INTEL): "CR for 6 GHz - Discovery", vol. 802.11ax, 9 July 2018 (2018-07-09), pages 1 - 7, XP068128358, Retrieved from the Internet <URL:https://mentor.ieee.org/802.11/dcn/18/11-18-1227-00-00ax-cr-for-6-ghz-discovery.docx> [retrieved on 20180709]

## Description

### TECHNICAL FIELD

This application relates to the communications field, and more specifically, to information transmission methods, apparatuses, a program and a computer-readable recording medium.

### BACKGROUND

A wireless local area network (wireless local area network, WLAN) usually works on an unlicensed spectrum (unlicensed spectrum), and unlicensed frequency bands are mainly classified into a frequency band below 1 GHz, a 2.4 GHz frequency band, a 5 GHz frequency band, a 60 GHz frequency band, and the like.

In the mainstream WLAN standards such as the 802.11a/b/g/n/ac/ax, the wireless local area network usually occupies the 2.4 GHz frequency band or the 5 GHz (which is 4.9 GHz and 5 GHz strictly) frequency band. Recently, in the 802.11ax standard, it is determined that a 6 GHz spectrum that may be subsequently used as the unlicensed spectrum is also used as an operation spectrum of the 802.11ax standard.

Air interface transmission shows different features based on different frequency bands. For a low frequency band, features of wireless transmission are relatively slow signal attenuation and a good wall penetration effect. However, a bandwidth is limited, and a rate is sometimes limited by a magnitude of the bandwidth. For example, at 2.4 GHz, for a data packet in the 802.11b/g/n/ax standard, basic bandwidth is 20 MHz, and maximum bandwidth is 40 MHz. In addition, there is some overlap between channels, and consequently, continuous use of a plurality of channels is affected. As a result, the 802.11a/ac does not work at 2.4 GHz. Compared with the congested 2.4 GHz frequency band, the 5 GHz frequency band and the 6 GHz frequency band have more spectrum resources, and are more suitable for data transmission of wide bandwidth (a maximum of 160 MHz is supported in the 802.11ac and the 802.11ax) and a high rate.

Currently, when a station (station, STA) is handed over between frequency bands or access points (access point, AP), a feature of a frequency band is not fully described. An existing description is not sufficient enough especially when there are some new features at 6 GHz frequency band. As a result, determining performed by the STA may be inaccurate.

Document Alfred Asterjadhi (Qualcomm Inc): "MAC CR subclause 27.16..1 ", IEEE-SA Mentor, Piscataway, NJ USA, 10 July 2018 proposes to transmit information from AP to STA regarding the 6 GHz frequency band.

Document Frank Hsu (MediaTek Inc.): "HE BSS Load Information Element", IEEE 11-17-0307-00-00ax, relates to the indication of utilization percentages in a BSS Load Element.

Document Frank Hsu (MediaTek): "BSS Load Information Element for 11ax", IEEE 802.11-17/0308r0, relates to the indication of utilization percentages in a BSS Load Element.

### SUMMARY

In view of this, the invention provides information transmission methods, apparatuses, a program and a computer-readable recording medium, to provide more information for a STA to perform determining, thereby improving precision when the STA is handed over between frequency bands or APs. The invention is defined by the claims.

### BRIEF DESCRIPTION OF DRAWINGS

FIG. 1 is a schematic diagram of a network architecture of a wireless local area network according to an embodiment of this application;

FIG. 2 is a schematic flowchart of an information transmission method according to an embodiment of this application;

FIG. 3 is a schematic structural diagram of a high efficiency basic service set load element according to an embodiment of this application;

FIG. 4 is a schematic structural diagram of a new information element according to an embodiment of this application;

FIG. 5 is a schematic structural diagram of a neighbor report element according to an embodiment of this application;

FIG. 6 is a schematic structural diagram of a multi-channel element according to an embodiment of this application;

FIG. 7 is a schematic structural diagram of a multi-user enhanced distributed channel access parameter set element according to an embodiment of this application;

FIG 8 is a schematic structural diagram of an enhanced distributed channel access parameter set element according to an embodiment of this application;

FIG 9 is a schematic structural diagram of a 6 GHz operation information field according to an embodiment of this application;

FIG. 10 is a schematic structural diagram of an extended basic service set load element according to an embodiment of this application;

FIG 11 is a schematic structural diagram of another extended basic service set load element according to an embodiment of this application;

FIG. 12 is another schematic flowchart of an information transmission method according to an embodiment of this application;

FIG. 13 is a schematic structural diagram of another neighbor report element according to an embodiment of this application;

FIG. 14 is a schematic block diagram of an information transmission apparatus according to an embodiment of this application;

FIG. 15 is another schematic block diagram of an information transmission apparatus according to an embodiment of this application;

FIG. 16 is another schematic block diagram of an information transmission apparatus according to an embodiment of this application; and

FIG. 17 is another schematic block diagram of an information transmission apparatus according to an embodiment of this application.

## DESCRIPTION OF EMBODIMENTS

The following describes the technical solutions of this application with reference to the accompanying drawings.

The technical solutions of embodiments of this application may be used in various communications systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a 5th generation (5th generation, 5G) system, or a new radio (new radio, NR) system.

A first device in the embodiments of this application may be user equipment, an access terminal, a subscriber unit, a subscriber station, a mobile station, a remote station, a remote terminal, a mobile device, a user terminal, a terminal, a wireless communications device, a user agent, or a user apparatus. The first device may alternatively be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in the embodiments of this application. For ease of description, a station (station, STA) is used as an example for description in the following embodiments.

The first device in the embodiments of this application may alternatively be a base transceiver station (base transceiver station, BTS) in a global system for mobile communications (global system of mobile communications, GSM) system or code division multiple access (Code Division Multiple Access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the first device may be a relay node, an access point, a vehicle-mounted device, a wearable device, a network device in a 5G network, a network device in a future evolved PLMN network, an access point (AP), a personal basic service set control point (personal basic service set control point, PCP), or the like. This is not limited in the embodiments of this application. For ease of description, an AP is used as an example for description in the following embodiments.

A second device in the embodiments of this application may be a STA or an AP.

In the embodiments of this application, the station or the access point includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system layer may include any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant communications software. In addition, a specific structure of an execution body of a method provided in the embodiments of this application is not specifically limited in the embodiments of this application, provided that a program that records code of the method provided in the embodiments of this application can be run to perform communication based on the method provided in the embodiments of this application. For example, the execution body of the method provided in the embodiments of this application may be the STA or the AP, or may be a function module that can invoke and execute the program in the STA or the AP.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include, but is not limited to: a magnetic storage component (for example, a hard disk, a floppy disk or, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include, but is not limited to a radio channel, and various other media that can store, contain, and/or carry an instruction and/or data.

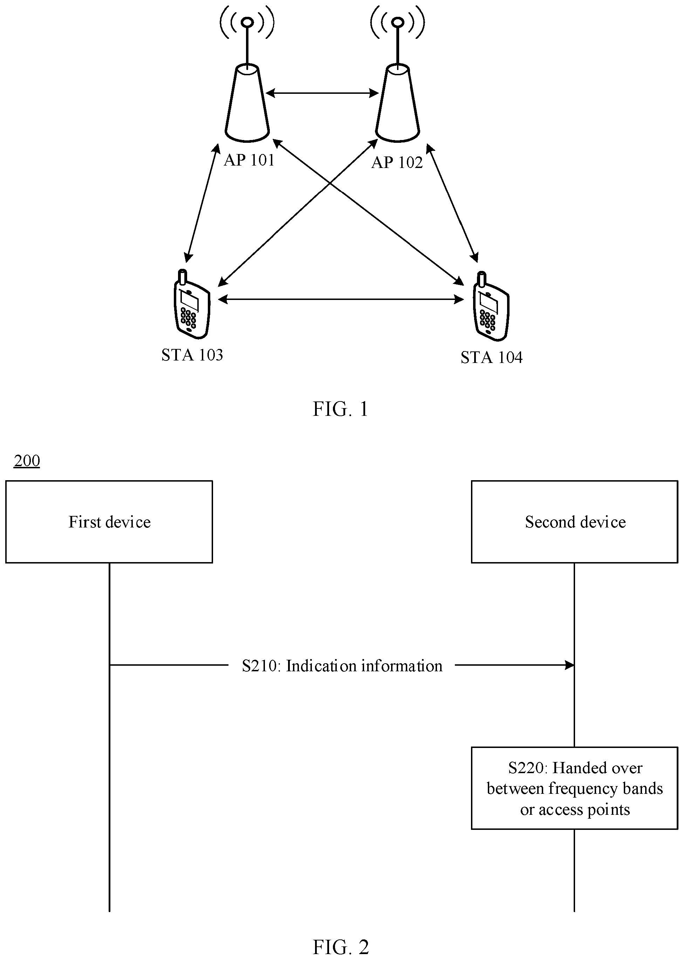

FIG. 1 is a schematic diagram of a network architecture of a wireless local area network according to an embodiment of this application. As shown in FIG. 1, the network architecture of the wireless local area network includes an AP 101, an AP 102, a STA 103, and a STA 104. The AP 101 may perform wireless communication with the STA 103 and the STA 104, and the AP 102 may also perform wireless communication with the STA 103 and the STA 104. Wireless communication may also be performed between the AP 101 and the AP 102, and between the STA 103 and the STA 104.

FIG 2 is a schematic flowchart of an information transmission method 200 according to an embodiment of this application. As shown in FIG. 2, the method includes the following steps.

S210: A first device sends indication information to a second device, and the second device receives the indication information sent by the first device, where the indication information is used to indicate information about an operation mode of a first frequency band, and the first frequency band is one or more frequency bands in frequency bands supported by the first device.

Optionally, the first frequency band is at least one of 2.4 GHz, 5 GHz, or 6 GHz.

Optionally, the information about the operation mode includes information about an operation mode of the first frequency band in a first time period, and the first time period is any time period before the first device sends the indication information to the second device.

Specifically, the first device may collect information about an operation mode of the first frequency band in a past time period.

Optionally, the information about the operation mode includes information about an operation mode of the first frequency band in a second time period, and the second time period is any time period after the first device sends the first indication information to the second device.

Specifically, the first device may plan information about an operation mode of the first frequency band in a future time period.

Optionally, the information about the operation mode of the first frequency band includes the operation mode of the first frequency band.

Optionally, the operation mode may be any combination of one or more of the following operation modes:

(1) Enhanced distributed channel access (enhanced distributed channel access, EDCA);
(2) Enhanced distributed channel access disable (EDCA disable);
(3) Schedule (schedule) (which may be any scheduling mechanism introduced to the extremely high throughput (extremely high throughput, EHT);
(4) Time division duplex slot based schedule (TDD slot based schedule);
(5) Mixed EDCA and schedule (mixed EDCA and schedule); and
(6) Mixed EDCA and TDD slot based schedule (mixed EDCA and TDD slot based schedule).

It should be understood that, the operation mode in this embodiment of this application is not limited to the foregoing six operation modes, and may be another operation mode. This is not limited in this application.

Optionally, the information about the operation mode is used to indicate information about an operation mode of one or more access categories (access category, AC) of the first frequency band.

It should be understood that, the one or more access categories may alternatively be understood as one or more services, as in the claimed invention.

Specifically, the first device or the second device may support one or more services, for example, a voice service and a video service. The indication information may indicate information about an operation mode of the one or more services. For example, an operation mode of the voice service is EDCA, and an operation mode of the video service is EDCA disable.

Optionally, the information about the operation mode includes time information corresponding to the operation mode.

The time information corresponding to the operation mode includes but is not limited to the following manners.

(1) Directly indicate duration
For example, the first field indicates that duration occupied by 6 GHz EDCA is 1 ms, and duration occupied by 6 GHz EDCA disable is 0.5 ms.
(2) Indicate duration and a unit
For example, duration=(numerical value)*unit. duration represents duration, numerical value represents a quantity of unit time, and unit represents unit duration. For example, the unit duration is $32\mu$s.
(3) Indicate a percentage of duration, corresponding to the operation mode, in a beacon interval (beacon interval, BI)
For example, duration=(percentage of BI)*(BI duration). duration represents duration, percentage of BI represents a percentage of duration in a BI, and BI duration represents duration of the BI.
(4) Indicate a percentage by using 8 bits
For example, 00000000 to 11111111 are used to represent 0% to 100% (linearly scaled with 255 representing 100%).

In each AC, a percentage of an operation mode (for example, EDCA disable) is indicated by using 8 bits:

$$\frac{EDCAdisable}{percentage[AC]} = \frac{EDCAdisabletime[AC]}{dot11ChannelUtilionBeaconInterval \times dota11BeaconPeriod \times 1024} \times 255$$

EDCA disabled time[AC] represents duration of ECDA disable of a specific AC, and a unit is microsecond (microsecond, ms). EDCA disabled time[AC] may further be expressed by using the following formula: EDCA disabled time[AC]=N[AC] *Ti[AC].

N[AC] indicates a quantity of EDCA disabled events for the AC.

Alternatively, N[AC] may be described as follows:
N[AC] is the number of EDCA disabled events, for this AC, that occurred during the total measurement time which is less than or equal to dot11ChannelUtilizationBeaconIntervals consecutive beacon intervals.

Ti[AC] is duration of an ith EDCA disabled event occurring on the AC.

dot11ChannelUtilizationBeaconIntervals is a quantity of beacon intervals (beacon intervals, BI) that are continuously measured.

dot11BeaconPeriod is duration of a Beacon.

Optionally, in this embodiment of this application, the first field may indicate a percentage EDCA disable time[AC] of an operation mode (for example, EDCA disable) of each AC, or may indicate another value. This is not limited in this application.

For example, the first field may alternatively indicate a sum of percentage of EDCA disable of each AC:

$$\frac{EDCAdisable}{percentage[AC]} = \frac{EDCAdisabletime}{dot11ChannelUtilionBeaconInterval \times dota11BeaconPeriod \times 1024} \times 255$$

EDCA disable time is a sum of percentages of EDCA disable of the ACs.

For another example, the first field may alternatively indicate a percentage of multi-user (multiple-user, MU) transmission of each AC:

$$\frac{MUtransmission}{percentage[AC]} = \frac{MUtransmissiontime[AC]}{dot11ChannelUtilionBeaconInterval \times dota11BeaconPeriod \times 1024} \times 255$$

MU transmission time is duration of downlink (downlink, DL) transmission and uplink (uplink, UL) transmission.

It should be understood that the DL transmission and the UL transmission may be separately calculated.

For another example, the first field may alternatively indicate a total percentage of MU transmission of each AC:

$$\frac{MUtransmission}{percentage[AC]} = \frac{MUtransmissiontime}{dot11ChannelUtilionBeaconInterval \times dota11BeaconPeriod \times 1024} \times 255$$

MU transmission time is a sum of percentages of MU transmission of the ACs.

Optionally, the indication information further includes a second field. The second field is used to indicate information about a quantity of third devices. The third device is one or more of an extremely high throughput station, a station that is capable of operating at 6 GHz, or a station that is capable of being scheduled.

Specifically, the second field in the indication information may indicate statistics about a quantity of newly-added special STAs. The newly-added special STAs include but are not limited to the following types:

(1) An extremely high throughput station (EHT STA);
(2) A station that is capable of operating at 6 GHz (6 GHz capable STA); and
(3) A station that is capable of being scheduled (scheduling capable STA).

Optionally, the indication information is carried in an existing frame or an existing information element (information element).

For example, the existing information element that is capable of carrying the indication information includes but is not limited to the following types:

(1) A high efficiency basic service set load element (HE BSS load element);
(2) A neighbor report element (neighbor report element); and
(3) A multi-channel element (multi-channel element).

Optionally, the indication information may be carried in a newly-added frame or a newly-added information element.

For example, the newly-added frame may include but is not limited to the following types:

(1) An extremely high throughput operation element (EHT operation element);
(2) An extremely high throughput basic service set load element (EHT BSS load element);
(3) An operation mode configuration element (operation mode configuration element); and
(4) A load report element (load report element).

Optionally, the method 200 further includes:
S220: The second device is handed over between frequency bands based on the indication information; or the second device is handed over between access points based on the indication information.

Optionally, the first device may be the AP 101 in FIG. 1, and the second device may be the STA 103 in FIG. 1. The AP 101 may send the indication information to the STA 103. After receiving the indication information, the STA 103 determines whether the STA 103 needs to be handed over between frequency bands or APs.

It should be understood that the first device may first send the indication information to the AP 102, and then the AP 102 forwards the indication information to the STA 103.

According to the information transmission method in this embodiment of this application, the indication information carries the information about the operation mode, to provide more information for a station to perform determining, thereby helping improve precision when the station is handed over between frequency bands or access points.

The following uses information statistics about EDCA disabled event in the 802.11ax as an example for description.

Manner 1

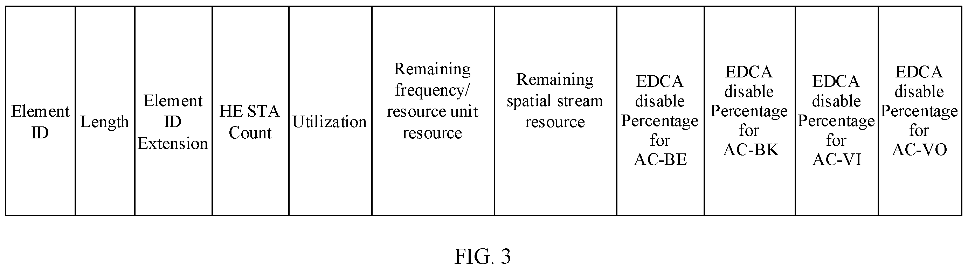

The indication information may be carried in an HE BSS load element. FIG. 3 is a schematic structural diagram of a high efficiency basic service set load element (HE BSS load element) according to an embodiment of this application. As shown in FIG. 3, a field may be added to indicate whether an "EDCA disable percentage for each AC" appears subsequently.

For example, one bit may be used to indicate whether last four percentages appear, or four bits may be used to respectively indicate whether the four percentages appear.

As shown in FIG. 3, the HE BSS load element includes an element identifier (Element ID) field, a length (Length) field, an element identifier extension (Element ID Extension) field, a high efficiency station count (HE STA Count) field, a utilization (Utilization) field, a remaining frequency/resource unit resource (Frequency Underutilization) field, and a remaining spatial stream resource (Spatial Stream Underutilization) field.

"EDCA disable percentage for AC-BE" represents a percentage of EDCA disable of a best effort (best effort, BE) service.

"EDCA disable percentage for AC-BK" represents a percentage of EDCA disable of a background (background, BK) service.

"EDCA disable percentage for AC-VI" represents a percentage of EDCA disable of a video (video, VI) service.

"EDCA disable percentage for AC-VO" represents a percentage of EDCA disable of a voice (voice, VO) service.

Optionally, a field may further be added to indicate a quantity of EHT STAs.

Optionally, a field may further be added to indicate a quantity of 6 GHz capable STAs.

Optionally, a field may further be added to indicate a quantity of scheduling capable STAs.

Manner 2

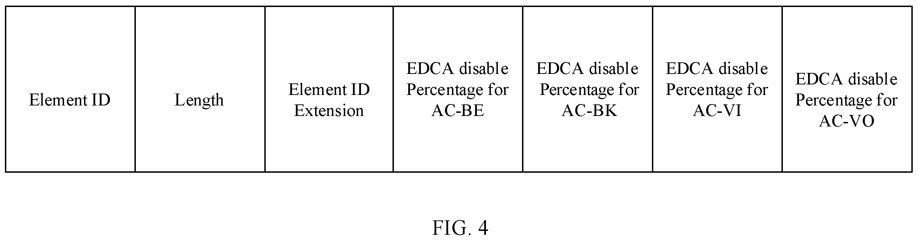

The indication information may be carried in a new information element (information element). FIG. 4 is a schematic structural diagram of a new information element. A field may be added to indicate whether an "EDCA disable percentage for each AC" appears subsequently.

For example, one bit may be used to indicate whether last four appear, or four bits may be used to respectively indicate whether the four appear.

Optionally, a field may further be added to indicate a quantity of EHT STAs.

Optionally, a field may further be added to indicate a quantity of 6 GHz capable STAs.

Optionally, a field may further be added to indicate a quantity of scheduling capable STAs.

As shown in FIG. 4, the information element includes an element identifier (Element ID) field, a length (Length) field, and an element identifier extension (Element ID Extension) field.

"EDCA disable percentage for AC-BE" represents a percentage of EDCA disable of a BE service.

"EDCA disable percentage for AC-BK" represents a percentage of EDCA disable of a BK service.

"EDCA disable percentage for AC-VI" represents a percentage of EDCA disable of a VI service.

"EDCA disable percentage for AC-VO" represents a percentage of EDCA disable of a VO service.

Manner 3

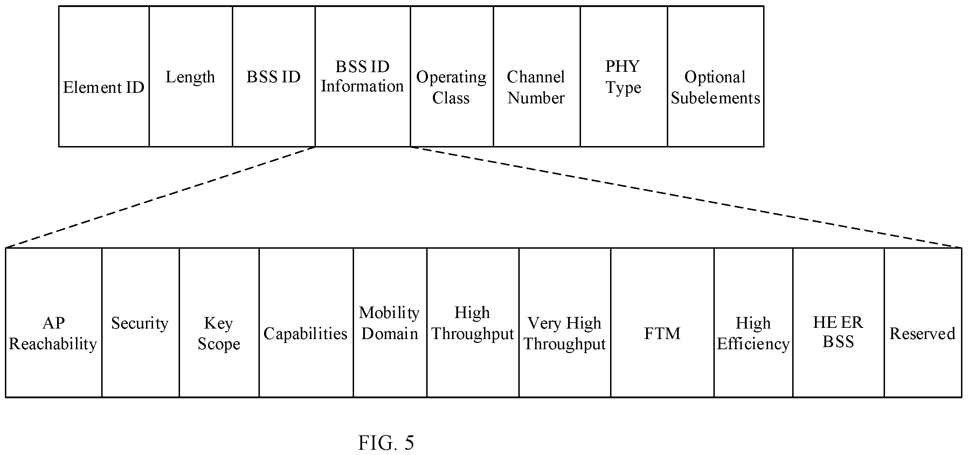

The indication information may be carried in a neighbor report element (neighbor report element). FIG. 5 is a schematic structural diagram of a neighbor report element (neighbor report element) according to an embodiment of this application.

Optionally, the indication information may be carried in an optional subelements (Optional Subelements) field in the neighbor report element.

Optionally, the indication information may be carried in a BSS ID Information field.

As shown in FIG. 5, the neighbor report element includes an element identifier (Element ID) field, a length (Length) field, a basic service set identifier (BSS ID) field, a basic service set identifier information (BSS ID Information) field, an operating class (Operating Class) field, a channel number (Channel Number) field, a physical layer type (PHY Type) field, and an optional subelements (Optional Subelements) field. The BSS ID Information field includes an access point reachability (AP Reachability) field, a security (Security) field, a key scope (Key Scope) field, a capabilities (Capabilities) field, a mobility domain (Mobility Domain) field, a high throughput (High Throughput, HT) field, a very high throughput (Very High Throughput, VHT) field, a fine timing measurement (Fine Timing Measurement, FTM) field, a high efficiency (High Efficiency, HE) field, a high efficiency extended range basic service set (High Efficiency Extended Range BSS, HE ER BSS) field, and a reserved (Reserved) field.

It should be understood that a specific field indication manner may be the same as the indication manner shown in FIG. 3 or FIG. 4. For brevity, details are not described herein again.

Manner 4

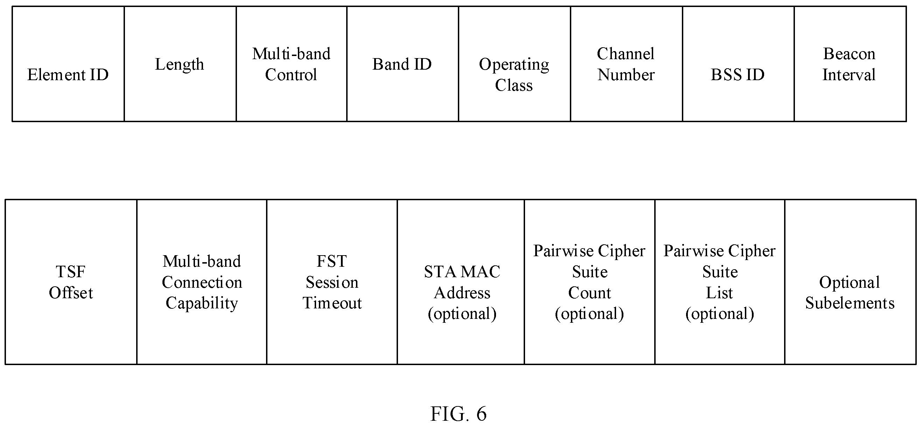

The indication information may be carried in a multi-channel element (multi-channel element). FIG. 6 is a schematic structural diagram of a multi-channel element according to an embodiment of this application.

As shown in FIG. 6, the multi-channel element includes an element identifier (Element ID) field, a length (Length) field, a multi-channel control (Multi- channel Control) field, a band identifier (Band ID) field, an operating class (Operating Class) field, a channel number (Channel Number) field, a BSS ID field, a BI field, a time synchronization function offset (Time Synchronization Function Offset, TSF Offset) field, a multi-channel connection capability (Multi-channel Connection Capability) field, a fast session transfer session timeout (Fast Session Transfer Session Timeout) field, a station media access control layer address (STA MAC Address) field, a pairwise cipher suite count (Pairwise Cipher Suite Count) field, a pairwise cipher suite list (Pairwise Cipher Suite List) field, and an optional subelements field. Optionally, the indication information may be carried in the optional subelements (Optional Subelements) field in the multi-channel element.

It should be understood that a specific field indication manner may be the same as the indication manner shown in FIG. 3 or FIG. 4. For brevity, details are not described herein again.

In this embodiment of this application, when the first frequency band is a plurality of frequency bands, the information about the operation mode may alternatively be used to collect parameter information of an operation mode of each of the plurality of frequency bands.

The following uses the operation mode of EDCA disable as an example for description.

(1) An operation mode of EDCA disable

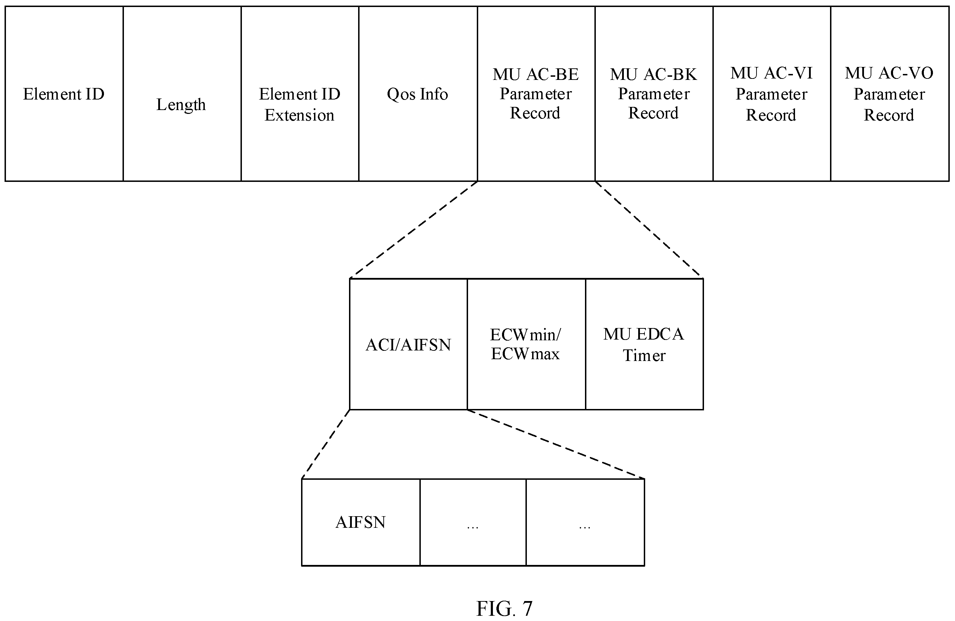

FIG. 7 is a schematic structural diagram of a multi-user enhanced distributed channel access parameter set element (MU EDCA Parameter Set element). As shown in FIG. 7, in the MU EDCA parameter set element, any interframe space (arbitration interframe spacing number, AIFSN) may be set to zero, to indicate that EDCA disable is performed on a corresponding AC. In addition, EDCA disable is duration of a multi-user enhanced distributed channel access timer (MU EDCA Timer), and timing starts after scheduling interaction is completed.

As shown in FIG. 7, the MU EDCA parameter set element includes an element identifier field, a length field, an element identifier extension field, a quality of service information (QoS Information) field, a multi-user BE service parameter record (MU AC-BE Parameter Record) field, a multi-user BK service parameter record (MU AC-BK Parameter Record) field, a multi-user VI service parameter record (MU AC-VI Parameter Record) field, and a multi-user VO service parameter record (MU AC-VO Parameter Record) field. The MU AC-BE parameter record field includes a service label/any interframe space (AC Index/AIFSN) field, a minimum/maximum contention window size (ECWmin/ECWmax) field, and a multi-user EDCA timer (MU EDCA Timer) field. The AC index/AIFSN field includes an AIFSN field.

(2) Another operation mode of EDCA disable

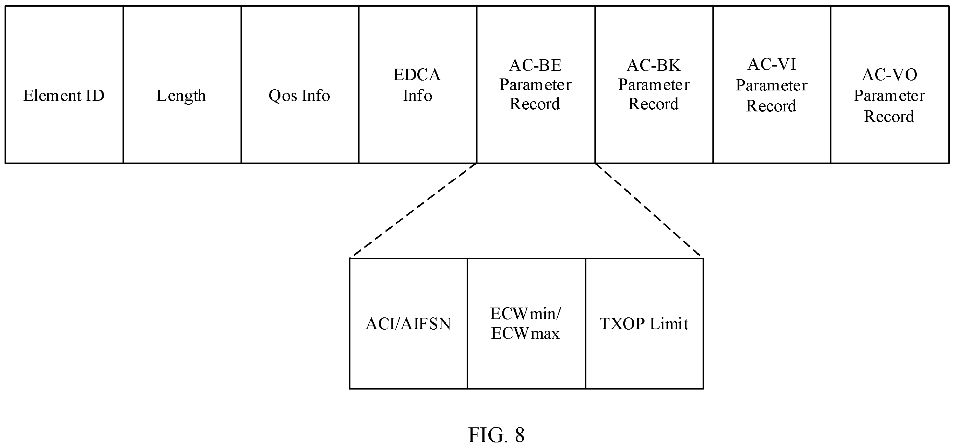

FIG. 8 is a schematic structural diagram of an enhanced distributed channel access parameter set element (EDCA Parameter Set element). As shown in FIG. 8, when an AP works in a 6 GHz frequency band, that an AIFSN is set to zero indicates that EDCA disable is performed on a corresponding AC until next modification is performed.

As shown in FIG. 8, the EDCA parameter set element includes an element identifier field, a length field, an element identifier extension field, a quality of service information (Qos Information) field, an update EDCA information (Update EDCA Information) field, a BE service parameter record (AC-BE Parameter Record) field, a BK service parameter record (AC-BK Parameter Record) field, a VI service parameter record (AC-VI Parameter Record) field, and a VO service parameter record (AC-VO Parameter Record) field. The AC-BE parameter record field includes an AC index/AIFSN field, an ECWmin/ECWmax field, and a transmission opportunity limit (TXOP Limit) field.

(3) Still another operation mode of EDCA disable

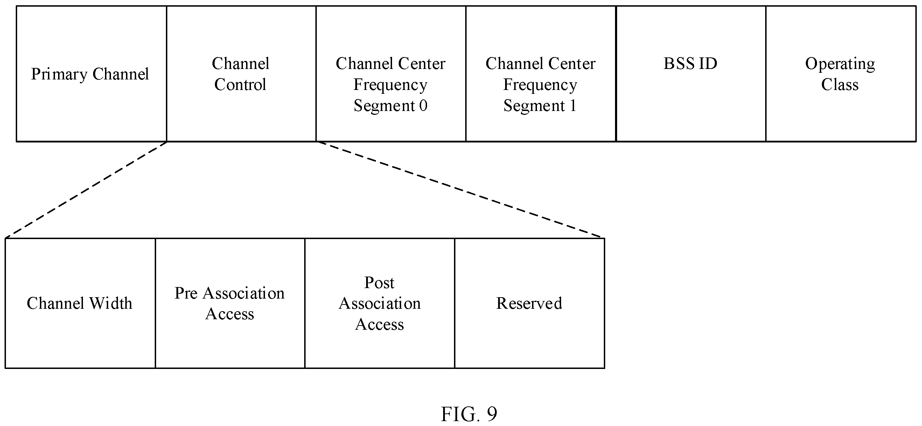

FIG. 9 is a schematic structural diagram of a 6 GHz operation information field (6 GHz operation information field). As shown in FIG. 9, a channel control field (Channel Control field) includes a pre association access (Pre Association Access) field and a post association access (Post Association Access) field. The pre association access field and the post association access field indicate, in the channel control field in the 6 GHz operation information field (Operation Information Field), whether EDCA is disabled (disable EDCA) before and after association (association). Certainly, the four ACs may alternatively be indicated in detail by using, for example, four bits.

As shown in FIG. 9, the 6 GHz operation information field includes a primary channel (Primary Channel) field, channel control (Channel Control) field, a channel center frequency segment 0 (Channel Center Frequency Segment 0) field, a channel center frequency segment 1 (Channel Center Frequency Segment 1) field, a BSS ID field, and an operating class field. The channel control field includes a channel width (Channel Width) field, a pre association access (Pre Association Access) field, a post association access (Post Association Access) field, and a reserved (Reserved) field.

In this embodiment of this application, the information, indicated by the first field, about the operation mode of the first frequency band may be information statistics about the operation modes of EDCA disable in the foregoing three cases.

For example, in the case (1), an AP may perform statistics and learn that in 10 ms, time of EDCA disable of the BE, the BK, the VI, and the VO are respectively 1 ms, 2 ms, 1 ms and 2 ms. In this case, the AP may carry indication information in an EHT/HE BSS load element, to indicate that percentages of EDCA disable of the BE, the BK, the VI, and the VO are respectively 10%, 20%, 10%, and 20%.

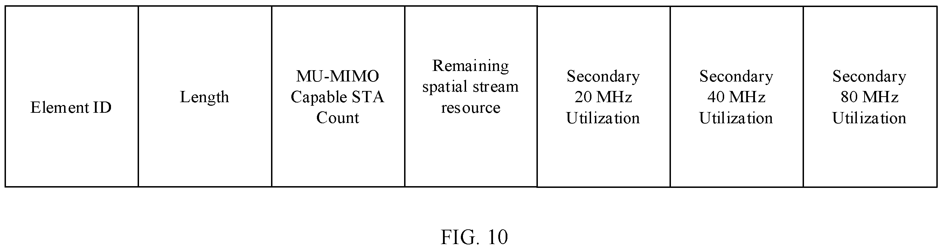

FIG. 10 is a schematic structural diagram of an extended basic service set load element (extended BSS load element) according to an embodiment of this application.

Optionally, the parameter information of the operation mode includes a remaining spatial stream resource (Spatial Stream Underutilization Field), and the remaining spatial stream resource may also be understood as a quantity of streams that can further be transmitted by the first device.

$$SpatialStream\ Underutilizationfield = \left\lfloor \frac{N_{\max-ss} \times T_{\text{busy}} - T_{utilized}}{N_{\max-ss} \times T_{\text{busy}}} \times 255 \right\rfloor$$

$N_{\text{max\_SS}}$ represents a maximum quantity of spatial streams supported by an AP. $T_{\text{busy}}$ represents a CCA busy time period in a measurement time period.

$$T_{utilized} = \sum_{i=1toN} N_{ssi}T_i$$

$T_i$ represents a time period in which $i^{th}$ transmission is performed, $N_{SSi}$ represents a quantity of spatial streams transmitted in the $T_i$ time period, and N represents a quantity of busy events (namely, a quantity of times of transmission) in the measurement time period.

Optionally, the parameter information of the operation mode includes utilization of a 20 MHz channel (Observable Secondary 20 MHz Utilization).

$$Observable\ Sec\ ondary\ 20MHzUtilization = \left\lfloor \frac{T_{busy,W1}}{dot11ChannelUtilizationBeaconIntervals \times dot11BeaconPeriod \times 1024} \times 255 \right\rfloor$$

$T_{\text{busy,W1}}$ represents duration in which it is detected that the 20 MHz channel is busy.

It should be understood that, in this embodiment of this application, the parameter information of the operation mode may further include utilization of a 40 MHz channel (Observable Secondary 40 MHz Utilization) or utilization of an 80 MHz channel (Observable Secondary 80 MHz Utilization).

As shown in FIG 10, the extended BSS load element further includes an element identifier field, a length field, and a multi-user multiple-input multiple-output capable station count (MU-MIMO Capable STA Count) field.

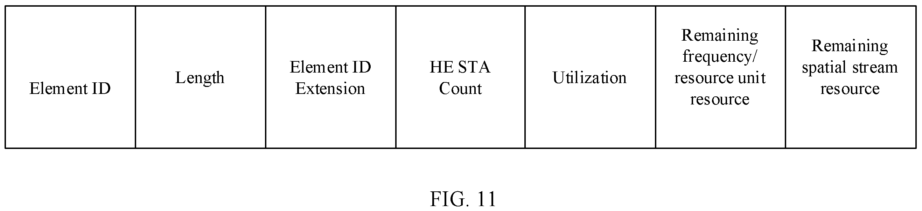

FIG. 11 is a schematic structural diagram of another extended basic service set load element (extended BSS load element).

Optionally, the parameter information of the operation mode includes a proportion (utilization field) of duration in which a channel is busy to duration of a beacon interval.

$$utilization = \left\lfloor \frac{T_{busy}}{dot11ChannelUtilizationBeaconIntervals \times dot11BeaconPeriod \times 1024} \times 255 \right\rfloor$$

$T_{\text{busy}}$ represents duration in which it is detected that the channel is busy.

Optionally, the parameter information of the operation mode includes a remaining frequency/resource unit resource (Frequency Underutilization field), or may be understood as a quantity of RUs that can further be transmitted.

$$Frequency\ UnderUtilization = \left\lfloor \frac{RU_{\max} \times T_{\text{busy}} - \sum_{i=1}^{N}\left\{\left(\sum_{j=1}^{N_{RU}} B_{j,i} \times RU_{j,i}\right)\right\} \times T_i}{RU_{\max} \times T_{\text{busy}}} \times 255 \right\rfloor$$

$RU_{\text{max}}$ represents a maximum quantity of resource units, N represents a quantity of times for which it is detected that the channel is busy, $N_{\text{RU}}$ represents a quantity of allocated RUs, i represents a label indicating that a channel is in a busy state, j respectively represents a label of each allocated RU, $RU_{j,i}$ represents a magnitude of a $j^{th}$ normalized RU when the channel is busy for an $i^{th}$ time, and $T_i$ represents duration in which the channel is busy for the $i^{th}$ time.

Optionally, the parameter information of the operation mode includes a remaining spatial stream resource (Spatial Stream Underutilization Field), and the remaining spatial stream resource may also be understood as a quantity of streams that can further be transmitted. A dimension of RUs is added herein.

$$SpatialStream \atop Underutilizationfield = \left| \frac{N_{max-ss} \times RU_{max} \times T_{busy} - \sum_{i=1}\left\{\left(\sum_{j=1} N_{SS,i,i} \times RUM_j\right) \times T_i\right\}}{N_{max-ss} \times RU_{max} \times T_{busy}} \times 255 \right|$$

$RUM_j$ represents a magnitude of a $j^{th}$ normalized RU.

As shown in FIG 11, the extended BSS load element further includes an element identifier field, a length field, an element identifier extension field, and a high efficiency station count (HE STA Count) field.

In this embodiment of this application, when the operation mode of the first frequency band is a plurality of operation modes, the first device may collect parameter information of each of the plurality of operation modes.

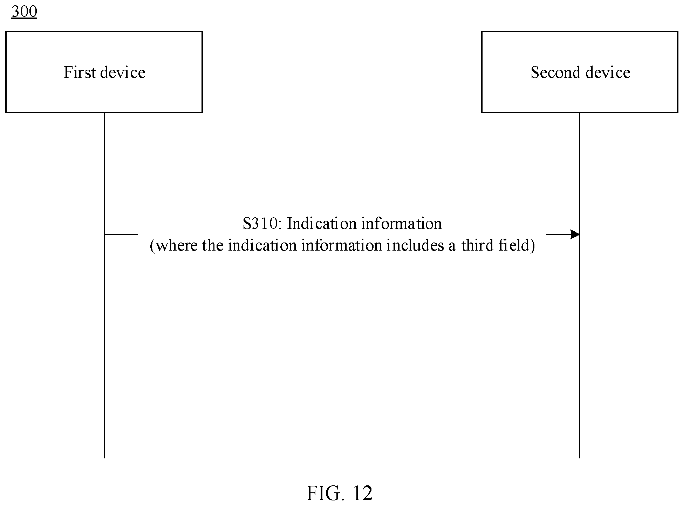

FIG. 12 is a schematic flowchart of an information transmission method 300 according to an embodiment of this application. As shown in FIG. 12, the method 300 includes the following steps.

S310: A first device sends indication information to a second device, and the second device receives the indication information sent by the first device, where the indication information includes a third field, and the third field is used to indicate a next-generation Wi-Fi standard.

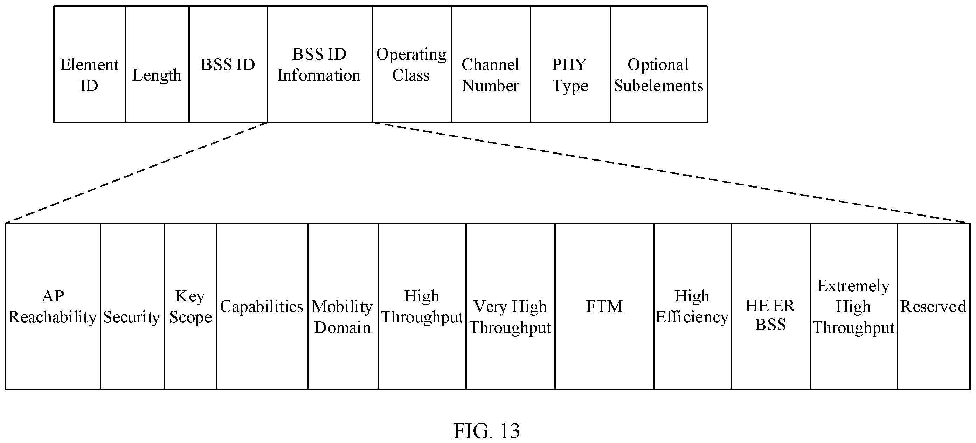

Optionally, the indication information is carried in a neighbor report element (neighbor report element). FIG. 13 is a schematic structural diagram of another neighbor report element.

Optionally, the indication information is carried in BSS ID Information in the neighbor report element.

As shown in FIG. 13, the next-generation Wi-Fi standard may be an extremely high throughput (extremely high throughput, EHT) standard, and an EHT standard information or an EHT subfield may be carried in the BSS ID Information in the neighbor report element.

It should be understood that, in the embodiments of this application, the first field, the second field, and the third field may be carried in a same frame or information element, or may be carried in different frames or information elements. For example, as shown in FIG. 13, the next-generation Wi-Fi standard may be carried in the BSS ID Information in the neighbor report element, and the information about the operation mode of the first frequency band and the information about the quantity of third devices may be carried in the optional subelements field in the neighbor report element.

An embodiment of this application further provides an information transmission method. The method includes: when a preset condition is satisfied, skipping performing EDCA disable in a first frequency band, or being not capable of performing EDCA disable in the first frequency.

Optionally, the first frequency band is 6 GHz.

Optionally, the preset condition is that the second device cannot be scheduled (Trigger).

Specifically, when determining that the second device cannot be scheduled, the first device may skip performing EDCA disable in the first frequency band.

Optionally, the first device may be an AP, and the second device may be a STA. The AP may be associated with at least one STA.

Optionally, the preset condition may be that at least one second device satisfies one or more of the following conditions:

(1) an uplink multi-user disable field (UL MU disable field) is 1;
(2) an uplink multi-user data disable field (UL MU data disable field) is 0 or 1; and
(3) an operation mode control uplink multi-user data disable receive support field (OM control UL MU data disable Rx support field) is 1.

Further, optionally, the preset condition may alternatively be that at least one second device satisfies one or more of the following conditions:

(1) an uplink multi-user disable field (UL MU disable field) is 1, and the second device is capable of operating only at 6 GHz;
(2) an uplink multi-user data disable field (UL MU data disable field) is 0 or 1, and the second device is capable of operating only at 6 GHz; and
(3) an operation mode control uplink multi-user data disable receive support field (OM control UL MU data disable Rx support field) is 1, and the second device is capable of operating only at 6 GHz.

Alternatively, the foregoing conditions may be described as follows:

The EDCA in 6 GHz shall/should/may not be disable, if any of the following satisfied:

(1) UL MU disable field=1, for any of the 6 GHz-only capable STA;

(2) UL MU data disable field=0 or 1, for any of the 6 GHz-only capable STA; and

(3) OM control UL MU data disable Rx support field=1, for any of the 6 GHz-only capable STA.

Alternatively, the foregoing conditions may be described as follows:

The EDCA in 6 GHz shall/should/may not be disable, if any of the following satisfied:

(1) At least one STA sets UL MU disable field=1 (and the STA is 6 GHz-only capable STA);

(2) At least one STA sets UL MU data disable field=0 or 1 (and the STA is 6 GHz-only capable STA); and

(3) At least one STA sets OM control UL MU data disable Rx support field=1 (and the STA is 6 GHz-only capable STA).

It should be understood that the foregoing preset conditions are merely examples, and there may be another preset condition. This embodiment of this application is not limited thereto.

For example, an AP is associated with a plurality of STAs. The plurality of STAs include a STA 1, and the STA 1 is capable of operating at 6 GHz. However, in a time period, the uplink multi-user disable field is 1, and the STA 1 cannot be scheduled. In this case, the AP determines that, in this time period, the STA 1 is capable of operating at 6 GHz but cannot be scheduled. Therefore, the AP may skip performing EDCA disable in this time period.

For another example, an AP is associated with a plurality of STAs. The plurality of STAs include a STA 2, and the STA 2 is capable of operating at 6 GHz. However, in a time period, an uplink multi-user data disable field is 0 or 1, an operation mode control uplink multi-user data disable receive support field is 1, and the STA 2 cannot be scheduled. In this case, the AP determines that, in this time period, the STA 2 is capable of operating at 6 GHz but cannot be scheduled. Therefore, the AP may skip performing EDCA disable in this time period.

Optionally, when the first device satisfies the preset condition, in the first frequency band, the first device may skip performing EDCA disable of at least one service, or may be not capable of performing EDCA disable of at least one service.

It should be understood that, in this embodiment of this application, that the first device may skip performing EDCA disable of at least one service may also be understood as that the first device may skip performing EDCA of at least one access category (access class, AC).

It should further be understood that, that when the first device satisfies the preset condition, in the first frequency band, the first device may skip performing EDCA disable of at least one service, or may skip performing EDCA disable of a specific service may alternatively be described as follows:

The EDCA of a specific AC in 6 GHz shall/should/may not be disable, if any of the following satisfied:

(1) At least one STA has traffic with this AC, and the STA sets UL MU disable field=1 (and the STA is 6 GHz-only capable STA);

(2) At least one STA has traffic with this AC, and the STA sets UL MU data disable field=0 or 1 (and the STA is 6 GHz-only capable STA); and

(3) At least one STA has traffic with this AC, and the STA sets OM control UL MU data disable Rx support field=1 (and the STA is 6 GHz-only capable STA).

For example, an AP is associated with a plurality of STAs. The plurality of STAs include a STA 3, and the STA 3 is capable of operating at 6 GHz. However, in a time period, the uplink multi-user disable field is 1, and all services of the STA 3 in this time period cannot be scheduled. In this case, the AP determines that the STA 3 is capable of operating at 6 GHz, but all the services cannot be scheduled in this time period. Therefore, the AP may skip performing EDCA disable of all the services of the STA 3 in this time period.

It should be understood that, although the AP may skip performing EDCA disable on all the services of the STA 3 in this time period, the AP may alternatively perform EDCA disable on another service. For example, in this time period, only a voice service is supported by the STA 3. In this case, the AP may skip performing EDCA disable on the voice service in this time period, but may alternatively perform EDCA disable on another service. For example, the AP may alternatively perform EDCA disable on a video service.

It should further be understood that, in this embodiment of this application, if a STA in STAs associated with the AP is capable of operating at 6 GHz, but cannot be scheduled in a time period, the AP may alternatively remove the STA from the STAs associated with the AP, that is, disassociate (disassociate) with the STA. Then the AP performs EDCA disable.

Alternatively, that the AP disassociates with the STA and then performs EDCA disable may be described as follows:

The AP can disable EDCA contention for the HE BSS after having disassociated all STAs (if any) that satisfy the condition above (i.e., do not support scheduling by UL MU).

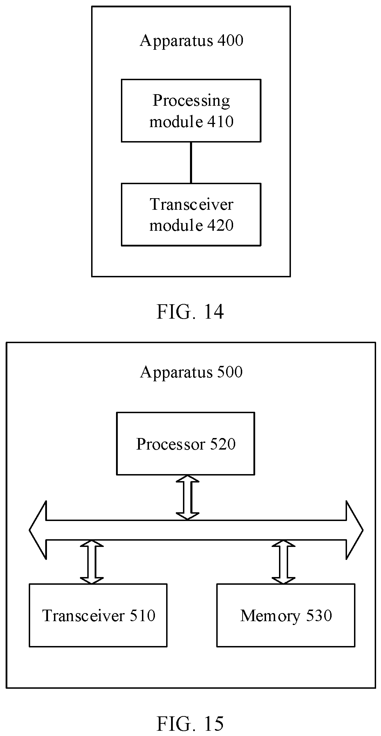

The foregoing describes in detail the information transmission methods in the embodiments of this application with reference to FIG. 1 to FIG. 13. The following describes in detail information transmission apparatuses in the embodiments of this application with reference to FIG. 14 to FIG. 17.

FIG. 14 is a schematic block diagram of an information transmission apparatus 400 according to an embodiment of this application. The information transmission apparatus 400 may correspond to the foregoing first device.

It should be understood that the information transmission apparatus 400 may correspond to the first device in the foregoing method embodiments, and may have any function of the first device in the method embodiments.

The information transmission apparatus 400 includes:

a processing module 410, configured to determine indication information, where the indication information includes a first field, the first field is used to indicate information about an operation mode of a first frequency band, and the first frequency band is one or more frequency bands in frequency bands supported by the apparatus 400; and
a transceiver module 420, configured to send the indication information to a second device.

Optionally, the information about the operation mode includes information about an operation mode of the first frequency band in a first time period, where the first time period is any time period before the transceiver module 420 sends the indication information to the second device; and/or
the information about the operation mode includes information about an operation mode of the first frequency band in a second time period, where the second time period is any time period after the transceiver module 420 sends the indication information to the second device.

Optionally, the first field is used to indicate information about an operation mode of one or more access categories of the first frequency band.

Optionally, the information about the operation mode includes time information corresponding to the operation mode, or a percentage of the operation mode in a third time period.

Optionally, the indication information further includes a second field. The second field is used to indicate information about a quantity of third devices. The third device is one or more of an extremely high throughput station, a station that is capable of operating at 6 GHz, or a station that is capable of being scheduled.

Optionally, the operation mode includes one or more of enhanced distributed channel access EDCA, enhanced distributed channel access disable EDCA disable, schedule, time division duplex slot based schedule TDD slot based schedule, mixed EDCA and schedule, or mixed EDCA and TDD slot based schedule.

Optionally, the processing module 410 is further configured to determine indication information, where the indication information includes a third field, and the third field is used to indicate a next-generation Wi-Fi standard; and the transceiver module 420 is further configured to send the indication information to the second device.

Optionally, the processor 410 is further configured to skip performing EDCA disable in the first frequency band when a preset condition is satisfied.

Optionally, the indication information is carried in a high efficiency basic service set load element HE BSS load element, a neighbor report element, or a multi-channel element.

It should be understood that the information transmission apparatus 400 in this embodiment of this application may correspond to the first device in the foregoing method embodiments, and the foregoing and other management operations and/or functions of the modules in the information transmission apparatus 400 are separately used to implement the corresponding steps in the foregoing methods. For brevity, details are not described herein again.

Optionally, if the information transmission apparatus 400 is a network device or a terminal device, the transceiver module 420 in this embodiment of this application may be implemented by a transceiver 510, and the processing module 410 may be implemented by a processor 520. As shown in FIG. 15, an information transmission apparatus 500 may include the transceiver 510, the processor 520, and a memory 530. The memory 530 may be configured to store indication information, and may further be configured to store code, an instruction, and the like executed by the processor 520. The transceiver 510 may include a radio frequency circuit. Optionally, the network device or the terminal device further includes a storage unit.

The storage unit may be, for example, a memory. When the network device or the terminal device includes the storage unit, the storage unit is configured to store a computer-executable instruction. The processing module is connected to the storage unit. The processing unit executes the computer-executable instruction stored in the storage unit, to enable the network device or the terminal device to perform the information transmission method.

Optionally, if the information transmission apparatus 400 is a chip in the network device or the terminal device, the chip includes the processing module 410 and the transceiver module 420. The transceiver module 420 may be implemented by the transceiver 510, and the processing module 410 may be implemented by the processor 520. The transceiver module may be, for example, an input/output interface, a pin, or a circuit. The processing module can execute the computer-executable instruction stored in the storage unit. The storage unit is a storage unit, such as a register or a cache, in the chip, or the storage unit may be a storage unit, such as a read-only memory (read-only memory, ROM), another type of static storage device capable of storing static information and static instructions, or a random access memory (random access memory, RAM), in the terminal device but outside the chip.

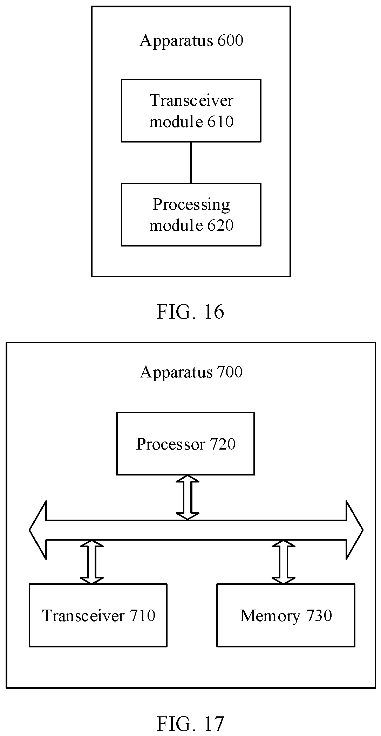

FIG. 16 is a schematic block diagram of an information transmission apparatus 600 according to an embodiment of this application. The information transmission apparatus 600 may correspond to the foregoing second device.

It should be understood that the information transmission apparatus 600 may correspond to the second device in the foregoing method embodiments, and may have any function of the second device in the method embodiments.

The information transmission apparatus 600 includes:

a transceiver module 610, configured to receive indication information sent by a first device, where the indication information includes a first field, the first field is used to indicate information about an operation mode of a first frequency band, and the first frequency band is one or more frequency bands in frequency bands supported by the first device; and

a processing module 620, configured to determine the indication information.

Optionally, the information about the operation mode includes information about an operation mode of the first frequency band in a first time period, where the first time period is any time period before the transceiver module 610 receives the indication information sent by the first device; and/or

the information about the operation mode includes information about an operation mode of the first frequency band in a second time period, where the second time period is any time period after the transceiver module 610 receives the indication information sent by the first device.

Optionally, the first field is used to indicate information about an operation mode of one or more access categories of the first frequency band.

Optionally, the information about the operation mode includes time information corresponding to the operation mode, or a percentage of the operation mode in a third time period.

Optionally, the indication information further includes a second field. The second field is used to indicate information about a quantity of third devices. The third device is one or more of an extremely high throughput station, a station that is capable of operating at 6 GHz, or a station that is capable of being scheduled.

Optionally, the operation mode includes one or more of enhanced distributed channel access EDCA, enhanced distributed channel access disable EDCA disable, a schedule mechanism, a time division duplex slot based schedule TDD slot based schedule mechanism, a mixed EDCA and schedule mechanism, or a mixed EDCA and TDD slot based schedule mechanism.

Optionally, the indication information is carried in a high efficiency basic service set load element HE BSS load element, a neighbor report element, or a multi-channelmulti-channel element.

Optionally, the transceiver module 610 is further configured to receive indication information, where the indication information includes a third field, and the third field is used to indicate a next-generation Wi-Fi standard; and

the processing module 620 is further configured to determine the indication information.

It should be understood that the information transmission apparatus 600 in this embodiment of this application may correspond to the second device in the foregoing method embodiments, and the foregoing and other management operations and/or functions of the modules in the information transmission apparatus 600 are separately used to implement the corresponding steps in the foregoing methods. For brevity, details are not described herein again.

Optionally, if the information transmission apparatus 600 is a network device or a terminal device, the transceiver module 610 in this embodiment of this application may be implemented by a transceiver 710, and the processing module 620 may be implemented by a processor 720. As shown in FIG. 17, an information transmission apparatus 700 may include the transceiver 710, the processor 720, and a memory 730. The memory 730 may be configured to store indication information, and may further be configured to store code, an instruction, and the like executed by the processor 720. The transceiver 710 may include a radio frequency circuit. Optionally, the network device or the terminal device further includes a storage unit.

The storage unit may be, for example, a memory. When the network device or the terminal device includes the storage unit, the storage unit is configured to store a computer-executable instruction. The processing unit is connected to the storage unit. The processing unit executes the computer-executable instruction stored in the storage unit, to enable the network device or the terminal device to perform the information transmission method.

Optionally, if the information transmission apparatus 600 is a chip in the network device or the terminal device, the chip includes the processing module 610 and the transceiver module 620. The transceiver module 610 may be implemented by the transceiver 710, and the processing module 620 may be implemented by the processor 720. The transceiver module may be, for example, an input/output interface, a pin, or a circuit. The processing module can execute the computer-executable instruction stored in the storage unit. The storage unit is a storage unit, such as a register or a cache, in the chip, or the storage unit may be a storage unit, such as a ROM, another type of static storage device capable of storing static information and static instructions, or a RAM, in the terminal but outside the chip.

A person of ordinary skill in the art may be aware that, units and algorithm steps of the examples described in combination with the embodiments disclosed in this specification may be implemented by electronic hardware or a combination of computer software and electronic hardware. Whether the functions are performed by hardware or software depends on a particular application and a design constraint of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and may be other division during an actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

If the functions are implemented in a form of a software functional unit and sold or used as an independent product, the functions may be stored in a computer-readable storage medium. Based on such an understanding, the technical solutions of this application essentially, or a part contributing to the prior art, or a part of the technical solutions may be implemented in a form of a software product. The computer software product is stored in a storage medium, and includes several instructions for instructing a computer device (which may be a personal computer, a server, a network device, or the like) to perform all or some of the steps of the methods according to the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. An information transmission method, comprising:

   generating, by a first device, indication information, wherein the indication information comprises a first field, wherein the first field indicates information about an operation mode of one or more services of a first frequency band, wherein the first frequency band is one or more frequency bands in frequency bands supported by the first device, wherein the information about the operation mode comprises a percentage of the operation mode in a time period and wherein the one or more services include one or more of a best effort service, a background service, a video service, or a voice service;
   sending, by the first device, the indication information to a second device.

2. An information transmission method, comprising:

   receiving, by a second device, indication information from a first device, wherein the indication information comprises a first field, wherein the first field indicates information about an operation mode of one or more services of a first frequency band, wherein the first frequency band is one or more frequency bands in frequency bands supported by the first device, wherein the information about the operation mode comprises a percentage of the operation mode in a time period and wherein the one or more services include one or more of a best effort service, a background service, a video service, or a voice service;
   determining, by the second device, the operation mode of a first frequency band, based on the indication information.

3. The method according to claim 1 or 2, wherein the time period is a first time period, and the first time period is any time period before the first device sends the indication information to the second device; and/or
   the time period is a second time period, and the second time period is any time period after the first device sends the indication information to the second device.

4. The method according to any one of claims 1 to 3, wherein the indication information further comprises a second field, wherein the second field indicates information about a quantity of third devices, and the third device is one or more of an extremely high throughput station, a station that is capable of operating at 6 GHz, or a station that is capable of being scheduled.

5. The method according to any one of claims 1 to 4, wherein the operation mode comprises one or more of enhanced distributed channel access, EDCA, enhanced distributed channel access disable, EDCA disable, schedule, time division duplex slot based schedule, TDD slot based schedule, mixed EDCA and schedule, or mixed EDCA and TDD slot based schedule.

6. The method according to any one of claims 1 to 5, wherein the indication information is carried in a high efficiency basic service set load element, HE BSS load element, a neighbor report element, or a multi-channel element.

7. An apparatus configured to perform a method as claimed in any one of claims 1 to 6.

8. The apparatus according to claim 7, comprising a processor and a memory, wherein the memory stores program code which, when executed by the processor, causes the apparatus to perform a method as claimed in any one of claims 1 to 6.

9. A program which, when executed by a computer, causes the computer to perform a method as claimed in any one of claims 1 to 6.

10. A computer-readable recording medium on which a program is recorded, wherein the program, when executed by a computer, causes the computer to perform a method as claimed in any one of claims 1 to 6.

**Patentansprüche**

1. Verfahren zum Übertragen von Informationen, umfassend:

Generieren von Angabeinformationen durch eine erste Vorrichtung, wobei die Angabeinformationen ein erstes Feld umfassen, wobei das erste Feld Informationen über einen Betriebsmodus eines oder mehrerer Dienste eines ersten Frequenzbandes angibt, wobei das erste Frequenzband eines oder mehrere Frequenzbänder in durch die erste Vorrichtung unterstützten Frequenzbändern ist, wobei die Informationen über den Betriebsmodus einen Prozentsatz des Betriebsmodus in einer Zeitperiode umfassen und wobei der eine oder die mehreren Dienste einen oder mehrere von einem Größte-Bemühung-Dienst, einem Hintergrunddienst, einem Videodienst oder einem Sprachdienst beinhalten;
Senden der Angabeinformationen durch die erste Vorrichtung an eine zweite Vorrichtung.

2. Verfahren zum Übertragen von Informationen, umfassend:

Empfangen von Angabeinformationen von einer ersten Vorrichtung durch eine zweite Vorrichtung, wobei die Angabeinformationen ein erstes Feld umfassen, wobei das erste Feld Informationen über einen Betriebsmodus eines oder mehrerer Dienste eines ersten Frequenzbandes angibt, wobei das erste Frequenzband eines oder mehrere Frequenzbänder in durch die erste Vorrichtung unterstützten Frequenzbändern ist, wobei die Informationen über den Betriebsmodus einen Prozentsatz des Betriebsmodus in einer Zeitperiode umfassen und wobei der eine oder die mehreren Dienste einen oder mehrere von einem Größte-Bemühung-Dienst, einem Hintergrunddienst, einem Videodienst oder einem Sprachdienst beinhalten;
Bestimmen des Betriebsmodus eines ersten Frequenzbands durch die zweite Vorrichtung, basierend auf den Angabeinformationen.

3. Verfahren gemäß Anspruch 1 oder 2, wobei die Zeitperiode eine erste Zeitperiode ist und die erste Zeitperiode eine beliebige Zeitperiode ist, bevor die erste Vorrichtung die Angabeinformationen an die zweite Vorrichtung sendet; und/oder die Zeitperiode eine zweite Zeitperiode ist und die zweite Zeitperiode eine beliebige Zeitperiode ist, nachdem die erste Vorrichtung die Angabeinformationen an die zweite Vorrichtung sendet.

4. Verfahren gemäß einem der Ansprüche 1 bis 3, wobei die Angabeinformationen ferner ein zweites Feld umfassen, wobei das zweite Feld Informationen über eine Menge an dritten Vorrichtungen angibt und die dritte Vorrichtung eine oder mehrere von einer Station mit extrem hohem Durchsatz, einer Station, die in der Lage ist, bei 6 GHz zu arbeiten, oder einer Station, die in der Lage ist, geplant zu werden, ist.

5. Verfahren gemäß einem der Ansprüche 1 bis 4, wobei der Betriebsmodus eines oder mehrere von erweitertem verteilten Kanalzugriff (enhanced distributed channel access, EDCA), Deaktivierung von erweitertem verteilten Kanalzugriff (EDCA-Deaktivierung, EDCA disable), Plan, zeitduplexslotbasiertem Plan, TDD-Slotbasiertem Plan (time division duplex, TDD), gemischtem EDCA und Plan oder gemischtem EDCA und TDD-Slotbasiertem Plan umfasst.

6. Verfahren gemäß einem der Ansprüche 1 bis 5, wobei die Angabeinformationen in einem hocheffizienten Basisdienstsatz-Ladeelement, HE BSS-Ladeelement (high efficiency basic service set, HE BSS), einem Nachbarberichtelement oder einem Mehrkanalelement getragen werden.

7. Vorrichtung, die dazu konfiguriert ist, ein Verfahren gemäß einem der Ansprüche 1 bis 6 durchzuführen.

8. Vorrichtung gemäß Anspruch 7, umfassend einen Prozessor und einen Speicher, wobei der Speicher Programmcode speichert, der, wenn er durch den Prozessor ausgeführt wird, bewirkt, dass die Vorrichtung ein Verfahren gemäß einem der Ansprüche 1 bis 6 durchführt.

9. Programm, das, wenn es durch einen Computer ausgeführt wird, bewirkt, dass der Computer ein Verfahren gemäß einem der Ansprüche 1 bis 6 durchführt.

10. Computerlesbares Aufzeichnungsmedium, auf dem ein Programm aufgezeichnet ist, wobei das Programm, wenn es durch einen Computer ausgeführt wird, bewirkt, dass der Computer ein Verfahren gemäß einem der Ansprüche 1 bis 6 durchführt.

**Revendications**

1. Procédé de transmission d'informations, comprenant :

la génération, par un premier dispositif, d'informations d'indication, dans lequel les informations d'indication comprennent un premier champ, dans lequel le premier champ indique des informations concernant un mode de fonctionnement d'un ou de plusieurs services d'une première bande de fréquence, dans lequel la première bande de fréquence est une ou plusieurs bandes de fréquence dans des bandes de fréquence prises en charge par le premier dispositif, dans lequel les informations concernant le mode de fonctionnement comprennent un pourcentage du mode de fonctionnement dans une durée et dans lequel l'un ou les plusieurs services comportent l'un ou plusieurs d'un service de meilleure qualité, d'un service d'arrière-plan, d'un service vidéo ou d'un service vocal ;
l'envoi, par le premier dispositif, de premières informations d'indication à deuxième dispositif.

2. Procédé de transmission d'informations, comprenant :

la réception, par un deuxième dispositif, d'informations d'indication provenant d'un premier dispositif, dans lequel les informations d'indication comprennent un premier champ, dans lequel le premier champ indique des informations concernant un mode de fonctionnement d'un ou de plusieurs services d'une première bande de fréquence, dans lequel la première bande de fréquence est une ou plusieurs bandes de fréquence dans des bandes de fréquence prises en charge par le premier dispositif, dans lequel les informations concernant le mode de fonctionnement comprennent un pourcentage du mode de fonctionnement dans une durée et dans lequel l'un ou les plusieurs services comportent l'un ou plusieurs d'un service de meilleure qualité, d'un service d'arrière-plan, d'un service vidéo ou d'un service vocal ;
la détermination, par le deuxième dispositif, du mode de fonctionnement d'une première bande de fréquence, sur la base des informations d'indication.

3. Procédé selon la revendication 1 ou 2, dans lequel la durée est une première durée, et la première durée est n'importe quelle durée avant que le premier dispositif n'envoie les informations d'indication au deuxième dispositif ; et/ou

la durée est une seconde durée, et la seconde durée est une durée quelconque après que le premier dispositif a envoyé les informations d'indication au deuxième dispositif.

4. Procédé selon l'une quelconque des revendications 1 à 3, dans lequel les informations d'indication comprennent également un second champ, dans lequel le second champ indique une information concernant une quantité de troisièmes dispositifs, et le troisième dispositif est l'un ou plusieurs d'une station à très haut débit, d'une station capable de fonctionner à 6 GHz, ou d'une station capable d'être programmée.

5. Procédé selon l'une quelconque des revendications 1 à 4, dans lequel le mode de fonctionnement comprend l'un ou plusieurs d'un accès à canal distribué amélioré, EDCA, d'une désactivation d'accès à canal distribué amélioré, d'une désactivation d'EDCA, d'une programmation, d'une programmation à base de créneaux duplex à répartition dans le temps, d'une programmation à base de créneaux TDD, EDCA et programmation mixtes, ou d'une programmation à base de créneaux EDCA et TDD mixtes.

6. Procédé selon l'une quelconque des revendications 1 à 5, dans lequel les informations d'indication sont portées dans un élément de charge d'ensemble de service de base à haut rendement, un élément de charge HE BSS, un élément de rapport voisin, ou un élément multicanal.

7. Appareil configuré pour mettre en œuvre le procédé selon l'une quelconque des revendications 1 à 6.

8. Appareil selon la revendication 7, comprenant un processeur et une mémoire, dans lequel la mémoire stocke un code de programme qui, lorsqu'il est exécuté par le processeur, amène l'appareil à exécuter un procédé selon l'une quelconque des revendications 1 à 6.

9. Programme informatique qui, lorsqu'il est exécuté par un ordinateur, amène l'ordinateur à mettre en œuvre un procédé selon l'une quelconque des revendications 1 à 6.

10. Support d'enregistrement lisible par ordinateur sur lequel un programme est enregistré, dans lequel le programme, lorsqu'il est exécuté, amène l'ordinateur à mettre en œuvre un procédé selon l'une quelconque des revendications 1 à 6.

FIG. 1

200

First device

Second device

S210: Indication information

S220: Handed over between frequency bands or access points

FIG. 2

| Element ID | Length | Element ID Extension | HE STA Count | Utilization | Remaining frequency/ resource unit resource | Remaining spatial stream resource | EDCA disable Percentage for AC-BE | EDCA disable Percentage for AC-BK | EDCA disable Percentage for AC-VI | EDCA disable Percentage for AC-VO |
|---|---|---|---|---|---|---|---|---|---|---|

FIG. 3

| Element ID | Length | Element ID Extension | EDCA disable Percentage for AC-BE | EDCA disable Percentage for AC-BK | EDCA disable Percentage for AC-VI | EDCA disable Percentage for AC-VO |
|---|---|---|---|---|---|---|

FIG. 4

| Element ID | Length | BSS ID | BSS ID Information | Operating Class | Channel Number | PHY Type | Optional Subelements |
|---|---|---|---|---|---|---|---|

| AP Reachability | Security | Key Scope | Capabilities | Mobility Domain | High Throughput | Very High Throughput | FTM | High Efficiency | HE ER BSS | Reserved |
|---|---|---|---|---|---|---|---|---|---|---|

FIG. 5

FIG. 6

| Element ID | Length | Multi-band Control | Band ID | Operating Class | Channel Number | BSS ID | Beacon Interval |
|---|---|---|---|---|---|---|---|

| TSF Offset | Multi-band Connection Capability | FST Session Timeout | STA MAC Address (optional) | Pairwise Cipher Suite Count (optional) | Pairwise Cipher Suite List (optional) | Optional Subelements |
|---|---|---|---|---|---|---|

| Element ID | Length | Element ID Extension | Qos Info | MU AC-BE Parameter Record | MU AC-BK Parameter Record | MU AC-VI Parameter Record | MU AC-VO Parameter Record |
|---|---|---|---|---|---|---|---|

| ACI/AIFSN | ECWmin/ ECWmax | MU EDCA Timer |
|---|---|---|

| AIFSN | ... | ... |
|---|---|---|

FIG. 7

EP 3 840 502 B1

| Element ID | Length | Qos Info | EDCA Info | AC-BE Parameter Record | AC-BK Parameter Record | AC-VI Parameter Record | AC-VO Parameter Record |
|---|---|---|---|---|---|---|---|

| ACI/AIFSN | ECW min/ ECW max | TXOP Limit |
|---|---|---|

FIG. 8

EP 3 840 502 B1

| Primary Channel | Channel Control | Channel Center Frequency Segment 0 | Channel Center Frequency Segment 1 | BSS ID | Operating Class |
|---|---|---|---|---|---|

| Channel Width | Pre Association Access | Post Association Access | Reserved |
|---|---|---|---|

FIG. 9

EP 3 840 502 B1

| Element ID | Length | MU-MIMO Capable STA Count | Remaining spatial stream resource | Secondary 20 MHz Utilization | Secondary 40 MHz Utilization | Secondary 80 MHz Utilization |
|---|---|---|---|---|---|---|

FIG. 10

| Element ID | Length | Element ID Extension | HE STA Count | Utilization | Remaining frequency/ resource unit resource | Remaining spatial stream resource |
|------------|--------|----------------------|--------------|-------------|----------------------------------------------|-----------------------------------|

FIG. 11

300

┌─────────────────┐                    ┌─────────────────┐
│  First device   │                    │  Second device  │
└─────────────────┘                    └─────────────────┘

S310: Indication information
(where the indication information includes a third field)

FIG. 12

| Element ID | Length | BSS ID | BSS ID Information | Operating Class | Channel Number | PHY Type | Optional Subelements |
|---|---|---|---|---|---|---|---|

| AP Reachability | Security | Key Scope | Capabilities | Mobility Domain | High Throughput | Very High Throughput | FTM | High Efficiency | HE ER BSS | Extremely High Throughput | Reserved |
|---|---|---|---|---|---|---|---|---|---|---|---|

FIG. 13

Apparatus 400

Processing module 410

Transceiver module 420

FIG. 14

Apparatus 500

Processor 520

Transceiver 510

Memory 530

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALFRED ASTERJADHI (QUALCOMM INC)**. MAC CR subclause 27.16..1. *IEEE-SA Mentor*, 10 July 2018

- **FRANK HSU (MEDIATEK INC.** HE BSS Load Information Element. *IEEE 11-17-0307-00-00ax*
- **FRANK HSU (MEDIATEK**. BSS Load Information Element for 11ax. *IEEE 802.11-17/0308r0*